**Europäisches Patentamt**

**European Patent Office**

**Office européen des brevets**

(19)

(11) Publication number : **0 258 650 B1**

# (12) EUROPEAN PATENT SPECIFICATION

(45) Date of publication of patent specification :
**12.04.95 Bulletin 95/15**

(51) Int. Cl.⁶ : **G06F 15/16, G06F 9/44**

(21) Application number : **87111124.1**

(22) Date of filing : **31.07.87**

(54) **Parallel computer system capable of asynchronous data transmission.**

(30) Priority : **01.08.86 JP 182361/86**
**13.03.87 JP 56507/87**

(43) Date of publication of application :
**09.03.88 Bulletin 88/10**

(45) Publication of the grant of the patent :
**12.04.95 Bulletin 95/15**

(84) Designated Contracting States :
**DE FR GB**

(56) References cited :
**US-A- 4 272 819**
**US-A- 4 325 120**
**US-A- 4 601 586**
**COMPUTER. vol. 10, no. 11, November 1977,**
**LONG BEACH US pages 12 - 21; Maj.**
**W.Greene: "A review of classification**
**schemes for computer communicationnet-**
**works"**
**Proceedings of the 1984 International Confer-**
**ence on Parallel Processing 21August 1984,**
**Colombus, Ohio, USA, pages 21 - 24;**
**J.T.Deutsch: "MSPLICE : a multiprocessor-**
**based circuit simulator"**

(73) Proprietor : **HITACHI, LTD.**
**6, Kanda Surugadai 4-chome**
**Chiyoda-ku, Tokyo 101 (JP)**

(72) Inventor : **Tanaka, Teruo**
**2-32-D408, Koyasu-cho**
**Hachioji-shi Tokyo (JP)**
Inventor : **Hamanaka, Naoki**
**3-19-18, Ohizumi**
**Nerima-ku**
**Tokyo (JP)**
Inventor : **Omoda, Koichiro**
**4-15-3, Fuchinobehon-cho**
**Sagamihara-shi Kanagawa-ken (JP)**
Inventor : **Nagashima, Shigeo**
**1200-13, Katakura-machi**
**Hachioji-shi Tokyo (JP)**
Inventor : **Muramatsu, Akira**
**Hillsade Hisasue 3-403**
**474-1, Hisasue**
**takatsu-ku**
**Kawasaki-shi Kanagawa-ken (JP)**
Inventor : **Yoshihara, Ikuo**
**5-8-1-201, Ochiai**
**Tama-shi (JP)**
Inventor : **Nakao, Kazuo**
**4-13-4, Youkoudai**
**Sagimihara-shi**
**Kanagawa-ken (JP)**
Inventor : **Nakagoshi, Junji**
**16-10, Tateno-cho**
**Nerima-ku**
**Tokyo (JP)**
Inventor : **Ojima, Kazuo**
**2-34-2, Shirasagi**
**Nakano-ku Tokyo (JP)**

(74) Representative : **Strehl Schübel-Hopf Groening**
**& Partner**
**Maximilianstrasse 54**
**D-80538 München (DE)**

## Description

BACKGROUND OF THE INVENTION

The present invention relates to a parallel computer system composed of a plurality of processors and a host processor.

The data transmission between the processors of a parallel computer system according to the prior art are accomplished by two methods: one - for data transmission between two processors being synchronized with each other; the other - for data transmission between two processors being left asynchronous. In the second method, more specifically, the individual processors are controlled so as to perform so-called "data flow type operations", in which each operation is not started in a processor before all data necessary for the operation arrive at the processor. According to the first method an overhead for synchronizing two processors for data transmission is a problem. That is, one processor is frequently interrupted for the synchronism by another so that the efficiency of each processor is degraded. According to the second method, on the other hand, the difficulty of the first method can be eliminated to some extent. Since, however, an operation cannot be started before all necessary data is prepared, the steps of an operation - data transmission - wait are sequential, and the overheads for the steps of the data transmission and wait are still left.

Another third method has also been proposed for data transmission without any synchronization of the processors (e.g., Japanese Patent Laid-Open No. 49464/ 1985). In this example, a processor sends not only data to be transmitted but also addresses of instructions requiring the former. Each time the receive processor receives the data, the execution of an instruction is interrupted, and a flag indicating arrival of the necessary data is added to the instruction which is in an address accompanying the data received. According to this third method, the interruption of the instruction execution for the above-specified processing is performed upon each data receipt, thus obstructing the desired high-speed operations.

Especially US-A-4,601,586, in view of which the first part of claim 1 has been drafted, discloses a processor system in which a solicitor processor sends a request for transmission of data to a solicity processor before the data is transmitted. This means that a program which requires data from another processor issues a send request of a particular shared data to a processor producing such data at a timing when the requiring or using program has been executed to a stage where the using program is ready to process the data. Afterwards, the using program waits for the arrival of the requested data.

SUMMARY OF THE INVENTION

An object of the present invention is to provide a parallel computer system capable of executing data transmission between processors at a high speed without any synchronisation between the processors. This object is met by the invention set forth in claim 1 and 8.

BRIEF DESCRIPTION OF THE DRAWINGS

Fig. 1 is a schematic block diagram showing an embodiment of a parallel computer system according to the present invention;

Fig. 2A is a diagram showing a data packet to be used in a modified parallel computer system according to the present invention;

Fig. 2B is a diagram showing associative memory means for receiving the data packet of Fig. 2A;

Fig. 3 is a schematic block diagram showing another embodiment of the parallel computer system according to the present invention;

Fig. 4 is a diagram showing examples of an execution process list before process switching and a wait process list in the system of Fig. 3;

Fig. 5 is a diagram showing an execution process list after the process switching and a wait process list in the system of Fig. 3;

Fig. 6 is a diagram showing an example of a program for a scalar computer (for sequential processing); and

Figs. 7a, 7b and 7c are diagrams showing plural processes for executing the respective programs of Fig. 6.

DETAILED DESCRIPTION OF THE PREFERRED EMBODIMENTS

The present invention will be described in detail in the following in connection with the embodiments thereof with reference to the accompanying drawings.

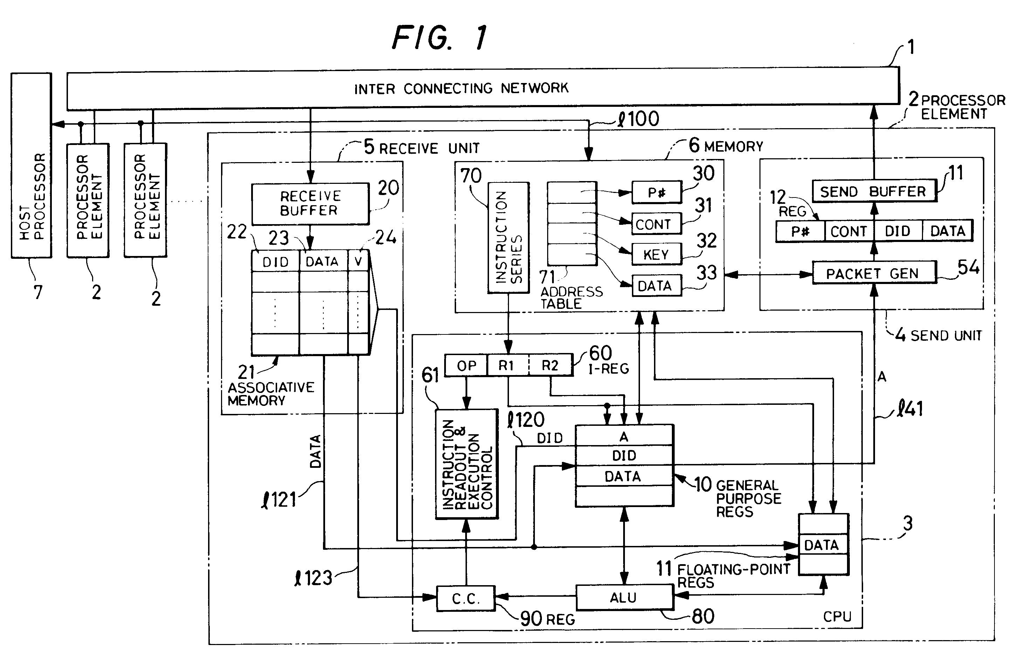

In Fig. 1, reference numeral 1 denotes a interconnecting network, and numeral 2 denotes a plurality of parallel processing processor elements. Each of these processor elements has an identical structure which includes central processing unit (CPU) 3, a send unit 4, a receive unit 5, a memory 6 and a host processor 7. The present embodiment is characterized in that the send unit 4 of each processor element 2 gives a data identification code DID to data to be sent and sends it in the form of a data packet to a destination processor element, whereas the receive unit 5 has an associative memory 21 for storing a pair of the data and the data identification code included in the data packet received. The central processing unit 3 reads and executes the instruction of an instruction queue, which is held in the memory 6, under the control of execution control 61. The host processor 7 is loaded with a sequential processing program programmed for an ordinary scalar computer and divides it into a plurality of programs to be executed in parallel by the processing elements 2. The divided programs are respectively transferred together with data necessary for respective programs through a line $\ell$100 to different processor elements 2, to start the processor elements 2. Moreover, after an end of execution a program in all of the processor elements 2 the host processor 7 reads out resultant data from each processor element 2 and outputs to an external device (not shown).

The parallel computer shown in Fig. 1 executes one program (which is called the "job"). For this, each processor element 2 is so preset by the host processor 7 as to execute one (or more) a plurality of unit portions (which are called the "processes") to be processed and executed. The instruction queue 70 shown in Fig. 1 is one belonging to such one (or more) processes.

Grouped general purpose registers 10 or floating-point registers 11 are connected to an arithmetic logic unit 80 and the memory 6. Each of the general purpose registers 10 or floating-point registers 11 can be designated by an instruction. For example, the data in one general purpose register or floating-point register designated by an instruction is operated by the arithmetic logic unit 80, and the result is stored in one general purpose register or floating-point register designated by that instruction. The arithmetic logic unit 80 can operate the data in the memory 6 and send the result to the memory 6.

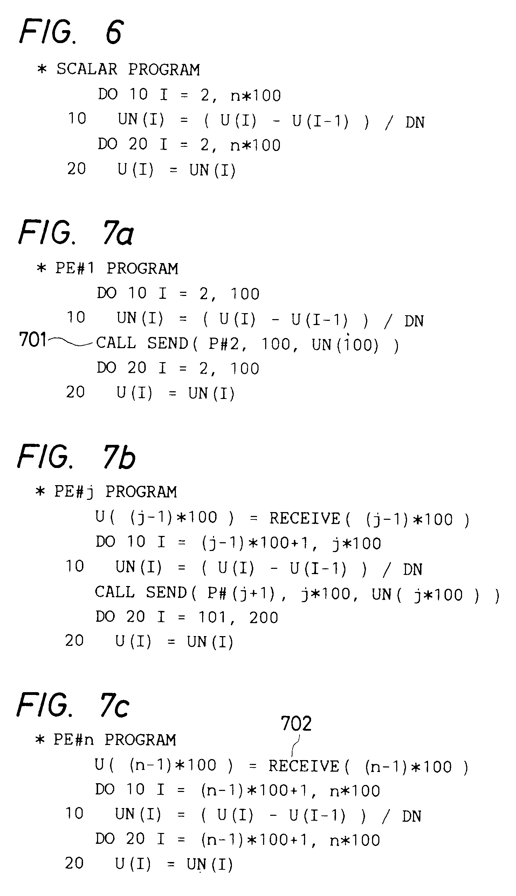

A specific example of the parallel processing program will be described with reference to Fig. 6 and Figs. 7a, 7b and 7c, wherein the program language used is FORTRAN.

Fig. 6 shows an example of a sequential processing program programmed for an ordinary scalar computer. This is a program for calculating data elements U(l) to U(100xn). This program is divided into programs in the number n of the processor elements 2 by the host processor 7 so that each divided program is used for calculation of 100 data elements. These divided programs are shown in Figs. 7a, 7b and 7c. Fig. 7a shows the program which is set in the processor element No. 1. Fig. 7c shows the program which is set in the processor element No. n. Fig. 7b shows the programs which are loaded into the processor elements No. 2 to No. n-1. Among initial values of data elements U(1) to U(nx100) required for execution of the program in Fig. 6, a group of 100 initial values of data elements U((i-1)x100+1) to U(ix100) are loaded into a processor element No. i (i=1,2, ... or n).

A processor element No. i requires a data element U(100x(i-1)) calculated by a processor element No. i-1. For this requirement, the data U(100x(i-1)) have to be transferred between the two processor elements. In the programs shown in Figs. 7a, 7b and 7c, the data sending process is performed by calling a subroutine SEND, and the data receiving process is performed by calling a function RECEIVE.

The data sending process will be described with reference to Fig. 7a. In response to the call of the subroutine SEND at 701, the data are sent to another processor element.

A first argument PE#2 of the subroutine SEND denotes the number of the destination processor element. A second argument 100 denotes a data identification code of a third argument UN(100) to be transferred. This subroutine SEND is realized by the following SEND instruction, as will be described with reference to Fig. 1.

The format of the SEND instruction is as follows, for example:

| Instruction Code | | R2 |
| --- | --- | --- |

The "Instruction Code" indicates that the instruction is the SEND instruction and "R2" indicates the number of one general purpose register. This register stores in advance the head address A of a parameter address table 71 in the memory 6 before the execution of that instruction.

The memory 6 has its area 30 to 33 set before the execution of the instruction with the number (P#) of the destination processor element, a control signal (CONT) for the transfer, the identification code (DID) for the transfer data, and the transfer data. Moreover, the parameter address table 71 is stored with the addresses of those areas. Incidentally, the transfer control signal CONT indicates a data transfer mode and is used so

3

as to indicate whether the data is to be sent to a single processor element or to all the processor elements.

The data identification code is predetermined for each data without direct relation to the value of the data and can be exemplified by the name or number of the data determined in advance.

When the CPU 3 decodes the SEND instruction, the address A in the general purpose register No. R2 designated by the instruction is sent to a packet generator 54 of the send unit 4 through a line $\ell41$. The packet generator 54 is constructed of a microprocessor, for example, and can operate independently of the CPU 3 after receipt of the address A. This packet generator 54 accesses the address table 71 in response to the address A and reads out the informations of the areas 30 to 33 in accordance with the content of the table 71 thereby to set them as a packet in a register 12. This packet in the register 12 is sent through the output buffer 11 to the interconnecting network 1 to give the data identification code DID and the data to the processor designated by that packet. Thus, the data send is carried out without any requirement for the synchronization with the receive processor elements when the instruction in the send processor element demands it. The send processor element can execute the succeeding instructions irrespective whether or not the send data have been processed by the receive processor elements.

Next, the data receive instruction will be described with reference to Fig. 7c. The data are received from other processor elements in response to the call of the function RECEIVE of 702.

The argument of the function RECEIVE is used for identifying the data to be received by the data identification code. The function RECEIVE is realized by the following RECEIVE instruction, as will be described with reference to Fig. 1.

The couple of the data identification code DID and the data in an identical data packet are received by an input buffer 20. The associative memory 21 has a plurality of entries each composed of an area 22 for storing the data identification code DID, a data storing area 23 and an effective indication bit area V 24. This effective indication bit is set at "1" when effective data are written in the entry. The data of the data identification code DID received by the input buffer 20 are written in the vacant region of the associative memory 21.

These data receiving operations are performed in parallel with the execution of the instruction at the CPU 3 each time the data arrive at the input buffer 20. When the CPU 3 uses the data in the associative memory 21, a specific instruction called the "RECEIVE" instruction is executed before the instruction for that use. The format of the RECEIVE instruction is as follows, for example:

| Instruction Code | R1 | R2 |

The "Instruction Code" indicates that the instruction is the RECEIVE instruction, and "R1" indicates the number of the general purpose register of floating-point register for storing the data to be read in. It is identified by the instruction code, for example, whether the register is the general purpose one or the floating-point one. "R2" indicates the number of a general purpose register which has stored in advance the same identification code as the data identification code DID accompanying the data to be read in.

When the RECEIVE instruction is set in an instruction register 60, the data identification code DID stored in the general purpose register No. R2 is sent out to the associative memory 21 through a line $\ell120$. The associative memory 21 examines whether or not there is one coincident with that data identification code and whether or not there is data having a corresponding effective bit 23 at "1". The associative memory 21 sends the entry, if any, to the grouped general purpose registers 10 through a line $\ell121$. These data are written in the general purpose register No. R1 designated by the RECEIVE instruction. The associative memory 21 sets the effective bit V at "0" and sends out the value "1" indicating the readout end, if the entry is found out, and otherwise the value "0" to a condition code (C.C.) register 90 through a line $\ell123$.

Subsequent to this RECEIVE instruction, there is prepared in advance a BRANCH instruction for discriminating the value of the condition code. When this BRANCH instruction is set in the instruction register, more specifically, the instruction read out execution control 61 examines the value of the condition code in the register 90 to bring a subsequent instruction executable if that value is at "1". If the value is at "0", on the contrary, the execution control 61 executes again the aforementioned RECEIVE instruction. As a result, the succeeding instructions are sequentially executed if the data having the identification code designated by the RECEIVE instruction have already been received. If, however, the coincidence data identification code is not found out in the associative memory 21 or the corresponding effective bit is at "0" with the code found out, the aforementioned RECEIVE instruction and the BRANCH instruction are executed repetitively. And, the succeeding instructions are executed after the target data have arrived at the associative memory 21.

As is apparent from the description thus far made, the data required by the program instructions can be utilized correctly and selectively irrespective of the order of receipt of the data by the associative memory 21

EP 0 258 650 B1

and which processor the data have been sent from.

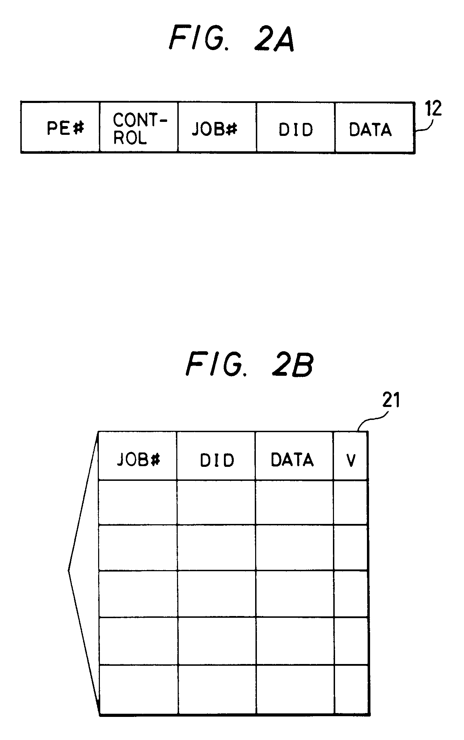

When a plurality of jobs are to be executed by the parallel computer, the data packet used in the embodiment of Fig. 1 may be replaced by that to which the job No. (JOB#) being executed at present by the CPU for outputting the data to be sent is added, as shown in Fig. 2A. In this case, the job No. JOB# is also stored in the associative memory 21 of Fig. 1, as shown in Fig. 2B. This modification is different from the embodiment of Fig. 1 in that the associative memory 21 retrieves whether or not there is an entry in which the data identification code designated by the CPU and the job No. JOB# are coincident.

With this modification, the data can be transferred among several programs belonging to the job bearing the same number. In the parallel computer system and in each processor element 2, more specifically, the modification shown in Fig. 2 is effective for executing a portion of some job, in case a plurality of jobs are to be executed.

In the two embodiments thus far described, the data having an identification code coincident with the data identification code DID are retrieved. The present invention should not be limited thereto but can be extended to such an extent that the associative memory 21 is modified to make the retrieval by using the magnitudes, the plus or minus signs and so on.

Unless, moreover, the readout end signal is not fed from the associative memory 21 to the instruction readout execution control 61 within a predetermined time period after the end of the RECEIVE instruction, the control 61 can be so modified as to read out the instruction of another process from the memory 6 and execute it.

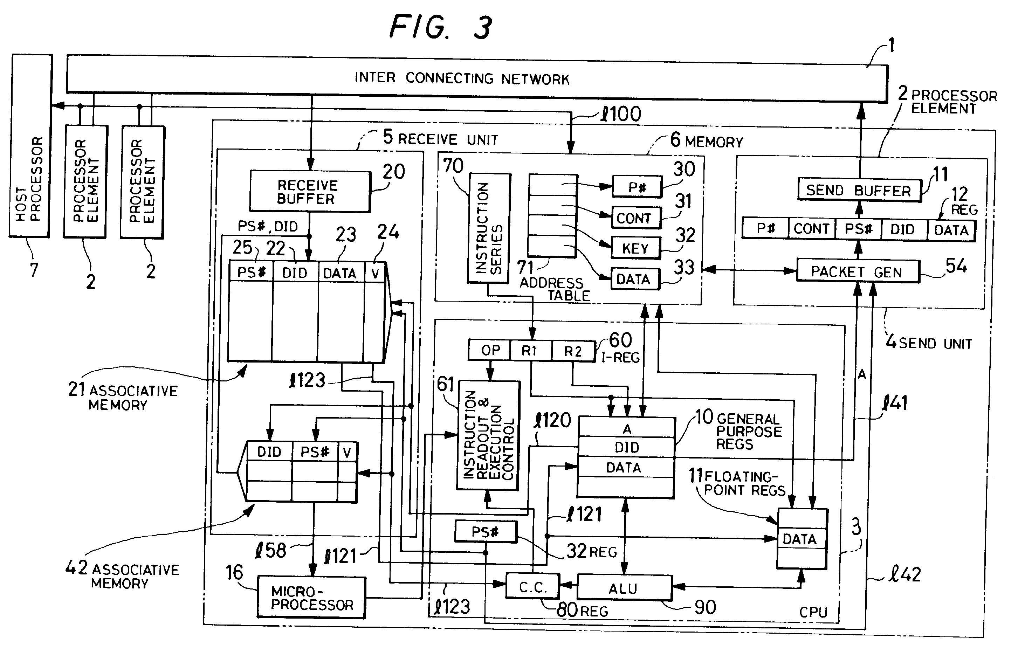

Fig. 3 shows an embodiment suitable especially for the modified case. In Fig. 3, the same reference numerals as those of Fig. 1 denote the identical parts. The embodiment of Fig. 3 is characterized by providing a second associative memory 42 in addition to the same associative memory 21 as that of Fig. 1.

In Fig. 3, the CPU 5 is different from the CPU of Fig. 1 in that it is equipped with a register 32 for storing the number PS# of a process being executed.

The processor number PS# in that register 32 is sent to the packet generator 54, when the SEND instruction is stored in the instruction register 60 and is executed, and is assembled into the data packet until it is held in the register 12.

The data packet from another processor element is received by the input buffer 20. At this time, however, the portions of the data packet other than the processor number PS# are received. Each entry of the first associative memory 21 is different from that of Fig. 1 in that it has a process number (PS#) field 25 in addition to the data identification number DID field 22, the data field 23 and the effective bit field V.

When the RECEIVE instruction is held in the instruction register 60, the data identification code DID and the process number PS# are fed as the associative keys from the grouped general purpose registers and the register 32, respectively, to the first associative memory 21.

The data identification code DID and the process number PS# are also fed to the second associative memory 42 so that they are written in one entry of the same. Each entry of this associative memory 42 has an effective bit field and is set at "1" upon each writing operation. In the first associative memory, an entry is searched which has information coincident with two associative keys and has an effective bit V at "1" and if such an entry is found out, it is sent to the grouped general purpose registers 10 through the line ℓ121 and a value "1" indicating an end of readout of the first associative memory 21 is set in the condition code register 80 through the line ℓ123. In response to the signal at "1" on the line ℓ123, on the other hand, the second associative memory 42 sets at "0" the effective bit V of the entry having been written previously.

On the other hand, in case no entry having the information coincident with the two input associative keys is found out in the first associative memory 21, the condition code register 80 is fed with the value "0" through the line ℓ123. Thus, the execution of the RECEIVE instruction is ended, and the control 61 executes the BRANCH instruction for judging the condition code in the register 80 as a subsequent instruction in the same process. The succeeding instruction is executed if the condition code is at "1". Otherwise, the process executing schedule program is executed for connecting the process being executed to a wait process list to put it into a wait state and taking another process connected to an execution process list so as to execute it.

Thus, the instruction in the process having brought newly into the executable state is executed.

In the receive unit 5, on the other hand, the process number PS#, the data identification code DID and the data in the data packet received newly by the input buffer 20 are stored in the first associative memory 21 and the process number PS# and the data identification code DID are fed as the associative keys to the second associative memory 42. If one entry has the data identificaiton code DID and the process number PS# coincident with those associative keys and the effective bit V corresponding thereto, the memory 42 informs the process number PS# of that entry of a microprocessor 16 through a line ℓ58. And, the effective bit V of that entry is set at "0".

Thus, the second associative memory detects the number of the process, if any in a wait state waiting for

5

the data in a data packet, each time it receives the data packet.

The microprocessor 16 is programmed to control the instruction read out by the control 61 for the following processes so that the process having the number PS# inputted may come into the executable state:

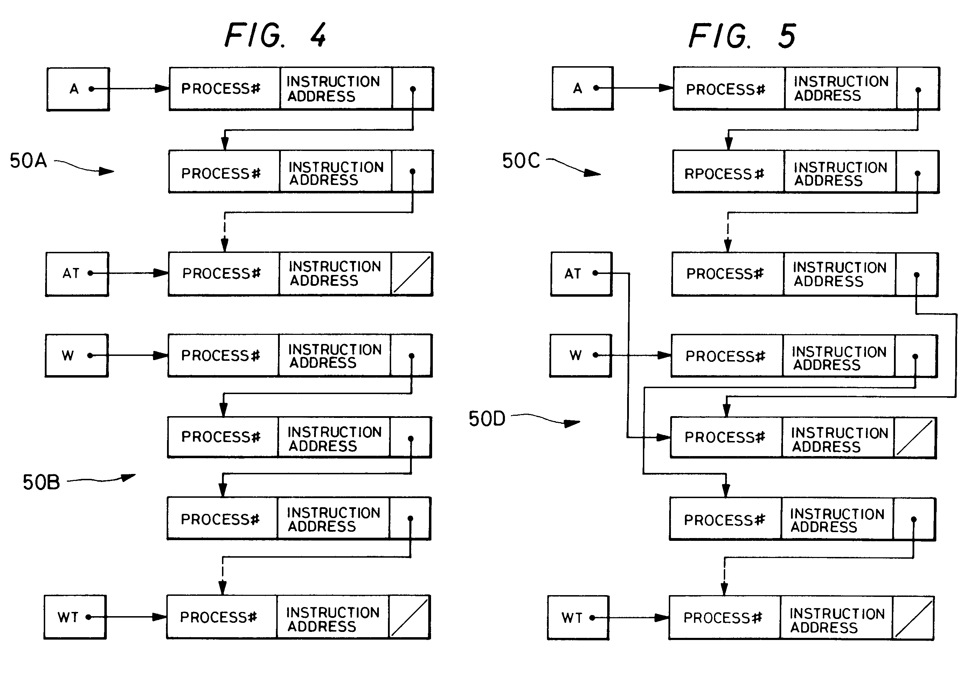

(1) For an exclusive control with the CPU 5, this CPU 5 is prohibited to access an execution process list (50A in Fig. 4) and a wait process list (50B in Fig. 4) in the memory 3;

(2) From the wait process list, there is retrieved a cell for holding the information on the process of the number sent from the second associative memory 42 through a line $\ell$58;

(3) The cell found out at the step 701 is connected to the tail of the execution process list;

(4) The aforementioned cell is deleted from the wait process list; and

(5) The prohibition of access to the above-specified two lists in the memory 3 is released.

In Fig. 4, numerals 50A and 50B denote examples of the execution process list and the wait process list, respectively, before the execution of the above-itemized steps. In Fig. 5, numerals 50C and 50D denote examples of the execution process list and the wait process list, respectively, after the execution of those steps. In Figs. 4 and 5, reference letters A, AT, W and WT denote the head and tail pointers of the execution process list and the head and tail pointers of the wait process list, respectively. Moreover, the instruction address attached to a certain process number denotes the address of an instruction to be executed of the process bearing the number.

Thus, the process of the number PS detected by the second associative memory 42 is executed.

## Claims

1. A parallel computer system comprising:

a plurality of processors (2) mutually connected by network means (1) and operable in parallel, said processors (2) comprising, respectively:

receive means (5) for receiving data from other processors (2) which has been produced by said other processors (2)

processing means (3) for executing instructions of a program assigned to the processor; and

send means (4) for sending data to other processors (2);

characterized in that

said send means (4) includes means (54) for sending data to at least one receiving processor (2) selected by the sending processing means (3) upon a send instruction issued on its own by said sending processing means (3);

said receive means (5) of said receiving processor (2) including a receive memory means (21) for receiving said data in parallel to the data processing per formed by the processing means (3) of said receiving processor (2), said processing means, when ready to process the transferred data, executes a RECEIVE instruction; and

said receive means (5) including means for detecting the presence of data within the receive memory means (21) in response to the RECEIVE instruction, and for reading out said data for processing by the processing means (3) of the receiving processor (2).

2. The computer system of claim 1, wherein said processing means (3) of the receiving processor (2) repetitively executes said RECEIVE instruction when ready to process data to be received.

3. The computer system of claim 1, further comprising a host processor (7) connected to the plurality of processors (2) for loading each processor (2) with one of plural parts of a program which are formed so as to communicate mutually during execution of the program.

4. The computer system of claim 1, wherein said data to be transferred includes a data packet comprising processable data (DATA) and a data identification code (DID) predetermined for said processable data (DATA).

5. The computer system of claim 4, wherein said receive memory means (21) is comprised of associative memory means for holding a data identification code (DID) received together with a corresponding processable data as an associative key to the processable data.

6. The computer system of claims 4 or 5, wherein said processor (2) further includes another memory means (42) connected to said receive means (5) and said processing means (3) for storing said data identification code (DID) while said data packet is not detected, for detecting receipt by said receive means (5) of said data packet, and for informing said processing means (3) of the receipt of said data packet.

7. The computer system of any one of claims 1 to 6, wherein each of said processors (2) further comprises:
storage means (6, 10) for holding instructions to be executed thereby and data;
instruction means (60, 61) connected to said storage means (6, 10) for putting the instructions into an execution state according to a predetermined order;
operation means (70) connected to said storage means (6, 10) and said instruction means (60, 61) and responsive to a first one of the instructions for performing an operation on data held at a location of said storage means (6,10) designated by the first instruction.

8. A method for executing a group of programs by means of a parallel computer system which comprises a plurality of processors each of which executes at least one of the programs, the group of programs processing a group of data signals which include data each of which is produced by a data producing program and used by a data using program, and each one of the processors having a local memory portion for holding at least one of the programs to be executed by said processor and a part of the group of data signals to be used or produced by said program, and a receive memory portion for holding data transferred from other processors, the method comprising the steps of:
(a) executing progams in parallel by different ones of the processors;
(b) requesting selective transfer of data by the program which has produced the data, so that the data is transferred from the data producing processor to the data using processor, selected by the program which has produced the data;
(c) transferring the data from the transferring processor to a receive memory portion of the receiving processor in response to execution of a step of requesting transfer of the data by the data producing program, and in parallel to execution of a program by the data using processor;
(d) selectively processing each one of the transmitted data by the program being executed by the data using processor when the processing means (3) of said data using processor is ready to process the transferred data.

**Patentansprüche**

1. Parallelrechnersystem mit:
mehreren Prozessoren (2), die durch ein Netzwerk (1) miteinander verbunden sind und parallel arbeiten, wobei die Prozessoren (2) jeweils:
eine Empfangseinrichtung (5) zum Empfang von Daten anderer Prozessoren (2), die von den anderen Prozessoren (2) erzeugt wurden,
eine Verarbeitungseinrichtung (3) zur Ausführung von Anweisungen eines dem Prozessor zugewiesenen Programms, und
eine Sendeeinrichtung (4) zum Senden von Daten an andere Prozessoren umfassen;
dadurch gekennzeichnet, daß
die Sendeeinrichtung (4) eine Einrichtung (54) umfaßt, um Daten an zumindest einen von der sendenden Verarbeitungseinrichtung (3) ausgewählten Prozessor (2) auf eine von der sendenden Verarbeitungseinrichtung (3) von sich aus ausgegebenen Sendeanweisung zu senden;
wobei die Empfangseinrichtung (5) des empfangenden Prozessors (2) eine Empfangsspeichereinrichtung (21) umfaßt, um diese Daten parallel zu der von der Verarbeitungseinrichtung (3) des empfangenden Prozessors (2) durchgeführten Datenverarbeitung zu empfangen, wobei die Verarbeitungseinrichtung eine EMPFANG-Anweisung ausführt, wenn diese zur Verarbeitung der übertragenen Daten bereit ist; und
die Empfangseinrichtung (5) eine Einrichtung zur Erfassung des Vorhandenseins von Daten in der Empfangsspeichereinrichtung (21) in Reaktion auf die EMPFANG-Anweisung und zum Auslesen der Daten zur Verarbeitung durch die Verarbeitungseinheit (3) des empfangenden Prozessors (2) umfaßt.

2. Rechnersystem nach Anspruch 1, wobei die Verarbeitungseinrichtung (3) des empfangenden Prozessors (2) wiederholt die EMPFANG-Anweisung ausführt, wenn diese für die Verarbeitung von zu empfangenden Daten bereit ist.

3. Rechnersystem nach Anspruch 1, ferner umfassend einen mit den mehreren Prozessoren (2) verbundenen Leitprozessor (7), um jeden Prozessor (2) mit einem von mehreren Teilen eines Programms zu laden, die zur gegenseitigen Kommunikation während der Ausführung des Programms ausgebildet sind.

4. Rechnersystem nach Anspruch 1, wobei die zu übertragenden Daten ein Datenpaket mit verarbeitbaren Daten (DATA) und eine für die verarbeitbaren Daten (DATA) vorgegebene Daten-Identifizierungskodierung (DID) umfassen.

5. Rechnersystem nach Anspruch 4, wobei die Empfangsspeichereinrichtung (21) einen Assoziativspeicher umfaßt, der die zusammen mit zugehörigen, verarbeitbaren Daten empfangene Daten-Identifizierungskodierung (DID) als Assoziativschlüssel zu den verarbeitbaren Daten speichert.

6. Rechnersystem nach Anspruch 4 oder 5, wobei der Prozessor (2) einen weiteren, mit der Empfangseinrichtung (5) und der Verarbeitungseinrichtung (3) verbundenen Speicher (42) zur Speicherung der Daten-Identifizierungskodierung (DID) umfaßt, solange das Datenpaket nicht erfaßt ist, zur Feststellung des Empfangs des Datenpakets durch die Empfangseinrichtung (5) und zur Informierung der Verarbeitungseinrichtung (3) von dem Empfang des Datenpakets.

7. Rechnersystem nach einem der Ansprüche 1 bis 6, wobei jeder Prozessor (2) ferner:
eine Speichereinrichtung (6, 10) zur Speicherung von Anweisungen, die von diesem auszuführen sind, sowie von Daten;
eine Anweisungseinrichtung (60, 61), die mit der Speichereinrichtung (6, 10) verbunden ist, um die Anweisungen gemäß einer vorgegebenen Ordnung in einen Ausführungszustand zu bringen; und
eine Ausführungseinrichtung (70) umfaßt, die mit der Speichereinrichtung (6, 10) und der Anweisungseinrichtung (60, 61) verbunden ist und auf eine erste der Anweisungen anspricht, um eine Bearbeitung der Daten durchzuführen, die an einer durch die erste Anweisung bestimmten Stelle der Speichereinrichtung (6, 10) bereitgehalten werden.

8. Verfahren zur Ausführung einer Programmgruppe mittels eines Parallelrechnersystems, das mehrere Prozessoren umfaßt, von denen jeder mindestens eines der Programme ausführt, wobei die Programmgruppe eine Gruppe von Datensignalen verarbeitet, die Daten umfassen, die von einem datenproduzierenden Programm erzeugt und von einem datenverwendenden Programm verwendet werden, wobei jeder der Prozessoren einen lokalen Speicherabschnitt aufweist, um mindestens eines der von dem Prozessor zu verarbeitenden Programme sowie einen Teil der von dem Programm zu verwendenden oder zu produzierenden Gruppe der Datensignale bereitzuhalten, und einen Empfangsspeicherabschnitt zum Bereithalten von Daten, die von anderen Prozessoren übertragen worden sind, wobei das Verfahren folgende Schritte umfaßt:
(a) paralleles Ausführen von Programmen durch verschiedene Prozessoren;
(b) Anfordern einer selektiven Übertragung von Daten durch das die Daten erzeugende Programm, so daß die Daten vom datenerzeugenden Prozessor an den von dem datenerzeugenden Programm bestimmten, datenverwendenden Prozessor übertragen werden;
(c) Übertragen der Daten von dem sendenden Prozessor an einen Empfangsspeicherabschnitt des empfangenden Prozessors in Reaktion auf die Ausführung eines Anforderungsschritts zur Übertragung von Daten durch das datenerzeugende Programm, parallel zur Ausführung eines Programms durch den datenverwendenden Prozessor;
(d) selektive Verarbeitung der übertragenen Daten durch das vom datenverwendenden Prozessor ausgeführte Programm, wenn die Verarbeitungseinrichtung (3) des datenverwendenden Prozessors bereit ist, die übertragenen Daten zu verarbeiten.

**Revendications**

1. Système informatique parallèle comprenant :
une pluralité de processeurs (2) raccordés mutuellement par des moyens formant réseau (1) et pouvant fonctionner en parallèle, lesdits processeurs (2) comprenant respectivement :
des moyens de réception (5) pour recevoir des données provenant d'autres processeurs (2) et qui ont été produites par lesdits autres processeurs (2);
des moyens de traitement (3) pour exécuter des instructions d'un programme affecté au processeur; et

des moyens d'émission (4) pour envoyer des données à d'autres processeurs (2);

caractérisé en ce que

lesdits moyens d'émission (4) comprennent des moyens (54) pour envoyer des données à au moins un processeur (2) effectuant la réception, sélectionné par les moyens de traitement d'émission (3) lors d'une instruction d'émission envoyée en propre par lesdits moyens de traitement d'émission (3);

lesdits moyens de réception (5) dudit processeur (2) effectuant la réception comprenant des moyens de mémoire de réception (21) pour recevoir lesdites données en parallèle avec le traitement des données exécuté par les moyens de traitement (3) dudit processeur (2) effectuant la réception, et lesdits moyens de traitement exécutant une instruction RECEPTION, lorsqu'ils sont prêts à traiter les données transférées; et

lesdits moyens de réception (5) contenant des moyens pour détecter la présence de données dans les moyens de mémoire de réception (21) en réponse à l'instruction RECEPTION et lire lesdites données pour le traitement effectué par les moyens de traitement (3) du processeur (2) effectuant la réception.

2. Système informatique selon la revendication 1, dans lequel lesdits moyens de traitement (3) du processeur (2) effectuant la réception exécutent de façon répétitive ladite instruction RECEPTION, lorsqu'ils sont prêts à traiter des données devant être reçues.

3. Système informatique selon la revendication 1, comprenant en outre un processeur central (7) raccordé à la pluralité de processeurs (2) pour charger chaque processeur (2) avec l'une de plusieurs parties d'un programme, qui sont formées de manière à communiquer mutuellement pendant l'exécution du programme.

4. Système informatique selon la revendication 1, dans lequel lesdites données devant être transférées incluent un paquet de données comprenant des données pouvant être traitées (DATA) et un code d'identification de données (DID) prédéterminé pour lesdites données pouvant être traitées (DATA).

5. Système informatique selon la revendication 4, dans lequel lesdits moyens de mémoire de réception (21) sont constitués par des moyens de mémoire associative pour retenir un code d'identification de données (DID) reçu conjointement avec des données correspondantes pouvant être traitées, en tant que code d'association pour les données pouvant être traitées.

6. Système informatique selon la revendication 4 ou 5, dans lequel ledit processeur (2) comprend en outre d'autres moyens de mémoire (42) raccordés auxdits moyens de réception (5) et auxdits moyens de traitement (3) pour mémoriser ledit code d'identification de données (DID), alors que ledit paquet de données n'est pas détecté, pour la détection dudit paquet de données par lesdits moyens de réception (5) et pour informer lesdits moyens de traitement (3) de la réception dudit paquet de données.

7. Système informatique selon l'une quelconque des revendications 1 à 6, dans lequel chacun desdits processeurs (2) comprend en outre :

des moyens de mémoire (6,10) pour conserver des instructions devant être exécutées par ce processeur et des données;

des moyens de délivrance d'instructions (60,61) raccordés auxdits moyens de mémoire (6,10) pour amener les instructions dans un état d'exécution conformément à un ordre prédéterminé;

des moyens opérationnels (70) raccordés auxdits moyens de mémoire (6,10) et auxdits moyens de délivrance d'instructions (60,61) et aptes à répondre à une première des instructions pour l'application d'une opération aux données conservées en un emplacement desdits moyens de mémoire (6,10) désigné par la première instruction.

8. Procédé pour exécuter un groupe de programmes au moyen d'un système informatique parallèle, qui comprend une pluralité de processeurs, dont chacun exécute au moins l'un des programmes, le groupe de programmes traitant un groupe de données qui incluent des données dont chacune est produite par un programme de production de données et est utilisée par un programme d'utilisation de données, et chacun des processeurs possédant une partie locale de mémoire pour conserver au moins l'un des programmes devant être exécuté par ledit processeur, et une partie du groupe de signaux de données devant être utilisés ou produits par ledit programme, et une partie de mémoire de réception pour conserver des données transférées à partir d'autres processeurs, le procédé comprenant les étapes consistant à :

a) exécuter des programmes en parallèle par différents processeurs;

b) demander un transfert sélectif de données par le programme qui a produit les données de manière que les données soient transférées depuis le processeur produisant les données au processeur utilisant les données, sélectionné par le programme qui a produit les données;

c) transférer les données du processeur de transfert à une partie de mémoire de réception du processeur effectuant la réception, en réponse à l'exécution d'une étape de demande de transfert des données par le programme de production de données, et parallèlement à l'exécution d'un programme par le processeur utilisant les données;

d) traiter de façon sélective chacune des données transmises, par le programme qui est exécuté par le processeur utilisant les données, lorsque les moyens de traitement (3) dudit processeur utilisant les données sont prêts à traiter les données transférées.

FIG. 1

# FIG. 2A

| PE# | CONT-ROL | JOB# | DID | DATA |
|-----|----------|------|-----|------|

12

# FIG. 2B

21

| JOB# | DID | DATA | V |
|------|-----|------|---|
|      |     |      |   |
|      |     |      |   |
|      |     |      |   |
|      |     |      |   |
|      |     |      |   |

FIG. 3

INTER CONNECTING NETWORK ~ 1

2 PROCESSOR ELEMENT

5 RECEIVE UNIT

6 MEMORY

HOST PROCESSOR — 7

PROCESSOR ELEMENT — 2

PROCESSOR ELEMENT — 2

RECEIVE BUFFER — 20

SEND BUFFER — 11

12 REG

| P# | CONT | PS# | DID | DATA |

70 INSTRUCTION SERIES

PS#, DID

| P# | 30 |
| CONT | 31 |
| KEY | 32 |
| DATA | 33 |

71 ADDRESS TABLE

25, 22   23   24

| PS# | DID | DATA | V |

PACKET GEN — 54

21 ASSOCIATIVE MEMORY

ℓ123

4 SEND UNIT

| OP | R1 | R2 | 60 I-REG

61

| DID | PS# | V |

INSTRUCTION READOUT & EXECUTION CONTROL

ℓ120

| A | 10 GENERAL PURPOSE REGS |
| DID | |
| DATA | |

11 FLOATING-POINT REGS

42 ASSOCIATIVE MEMORY

ℓ58   ℓ121

PS#

ℓ121

32 REG

DATA — 3

16 MICRO-PROCESSOR

ℓ123

C.C.   ALU

80 REG   90

ℓ42

CPU

ℓ100

ℓ41

A

EP 0 258 650 B1

13

*FIG. 4*

*FIG. 5*

# FIG. 6

```
* SCALAR PROGRAM
      DO 10 I = 2, n*100
   10    UN(I) = ( U(I) - U(I-1) ) / DN
      DO 20 I = 2, n*100
   20    U(I) = UN(I)
```

# FIG. 7a

```
* PE#1 PROGRAM
      DO 10 I = 2, 100
   10    UN(I) = ( U(I) - U(I-1) ) / DN
701    CALL SEND( P#2, 100, UN(100) )
      DO 20 I = 2, 100
   20    U(I) = UN(I)
```

# FIG. 7b

```
* PE#j PROGRAM
      U( (j-1)*100 ) = RECEIVE( (j-1)*100 )
      DO 10 I = (j-1)*100+1, j*100
   10    UN(I) = ( U(I) - U(I-1) ) / DN
      CALL SEND( P#(j+1), j*100, UN( j*100 ) )
      DO 20 I = 101, 200
   20    U(I) = UN(I)
```

# FIG. 7c

```
                          702
* PE#n PROGRAM
      U( (n-1)*100 ) = RECEIVE( (n-1)*100 )
      DO 10 I = (n-1)*100+1, n*100
   10    UN(I) = ( U(I) - U(I-1) ) / DN
      DO 20 I = (n-1)*100+1, n*100
   20    U(I) = UN(I)
```